# EUROPEAN PATENT SPECIFICATION

(11) **EP 2 921 719 B1**
(45) Date of publication and mention of the grant of the patent: **03.05.2017**
(21) Application number: 15159526.1
(22) Date of filing: 17.03.2015
(51) Int. Cl.: F16B 2/10, F16B 7/04, E03D 11/14

(54) **FASTENING DEVICE FOR MAKING SUPPORT FRAMES OF SANITARY APPLIANCES**
BEFESTIGUNGSVORRICHTUNG ZUR HERSTELLUNG VON VORRICHTUNGSSTÜTZRAHMEN SANITÄRER ANLAGEN
DISPOSITIF DE FIXATION POUR FABRIQUER DES CADRES DE SUPPORT D'APPAREILS SANITAIRES

(30) Priority: 17.03.2014 IT MI20140436
(43) Date of publication of application: 23.09.2015
(73) Proprietor: VALSIR S.p.A., 25078 Vestone (BS) (IT)
(72) Inventor: Varotti, Mario, 25078 Vestone (IT); Frigo, Flavio, 31050 Ponzano Veneto (IT)
(74) Representative: Cernuzzi, Daniele

(56) References cited:
- DE-U1-202009 012 001

## Description

The present invention relates to a fastening device for making support frames of sanitary appliances, in particular for producing wall systems. One fastening device for making support frames for solar panels is shown in DE 20 2009 012 001 U.

In the field of sanitary appliance installation and respective system it is increasingly widespread the use of wall systems, additional to the building structure, which allow the installation of a bathroom in a fast, practical and clean manner.

Several systems are known allowing the installer to make wall systems comprising support frames on which sanitary appliances and respective components are fastened.

The known systems however have some drawbacks, in particularly regarding the union of the various components to the bars forming the support frame. For example, the known systems may:
- be relatively complicated to produce, not very versatile, formed by a large number of components;
- require long assembly time and difficult assembly operations and/or use of tools;
- be poorly ergonomic, requiring the installer difficult and/or unnatural movements;
- in some cases, at least for assembling certain components, require the work of two persons;
- sometimes not allow accurate adjusting of distances between the bars and/or between other components, or any clearance adjustments.

It is an object of the present invention to provide a fastening device for making support frames of sanitary appliances, in particular for producing wall systems, which overcome the drawbacks of the prior art highlighted here.

The present invention therefore relates to a fastening device for making support frames of sanitary appliances, in particular for producing wall systems, as defined in essential terms in the appended claim 1 and, in its additional features, in the dependent claims.

The fastening device of the invention is simple and inexpensive to manufacture, and simple, fast and efficient to use.

Further characteristics and advantages of the present invention will become clear from the description of the following non-limiting embodiments, with reference to the figures of the accompanying drawings, wherein:
- Figure 1 is a perspective view of a detail of a support frame for sanitary appliances, wherein two fastening devices are used according to the invention for producing a spacing system between two bars of the frame;
- Figure 2 is an exploded perspective view, with parts removed for clarity, of the spacing system of Figure 1;
- Figure 3 is a perspective view of the spacing system of figure 1, in a different operating configuration;
- Figures 4 and 5 are two views in section of the fastening device of the invention, in respective operative configurations;
- Figure 6 is a perspective view of another application of the fastening device of the invention, in particular for producing an angular spacing system between two bars of a frame;
- Figure 7 is an exploded perspective view of another application of the fastening device of the invention, in particular for fastening a bar of a frame to an outer support surface, for example a wall or a floor;
- Figures 8-13 are perspective views of the fastening device of Figure 7 in different operating configurations;
- Figures 14-15 are perspective views of a spacing system fastened to the wall, making use of a pair of fastening devices of the invention and in respective different operating configurations;
- Figures 16-17 are perspective views of two fastening devices of the invention used to fasten a frame to a fastening element of a sanitary appliance;
- Figures 18-20 are perspective views of a further application of the fastening device of the invention, in particular for producing an adjustable support system for self-supporting walls;
- Figures 21-22 are an assembled perspective view and an exploded perspective view, with parts removed for clarity, of an alternative embodiment of the fastening device according to the invention.

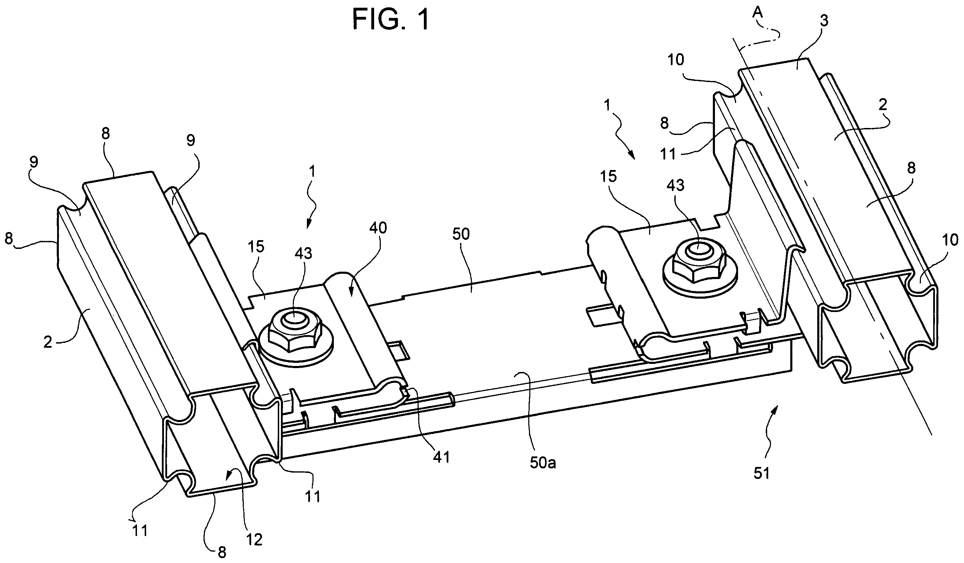

In figure 1, 1 denotes a fastening device for making support frames of sanitary appliances, in particular for producing wall systems; by way of example, in Figure 1 two fastening devices 1 are used for making a spacer between two bars 2 (shown only partly in Figure 1) of a frame 3 (not illustrated in its entirety).

The frame 3 is formed by tubular profiled bars 2, for example (but not necessarily) made of metal, in particular steel.

Each bar 2 projects along a longitudinal axis between two axially opposite open ends, provided with respective openings delimited by respective closed front edges, and consisting of a tubular profile section internally hollow and with a cross-shaped closed transversal section. Each bar has an inner longitudinal cavity.

The bar 2 has two pairs of lateral walls 8 arranged like the sides of a square; the lateral walls 8 of each pair are facing and parallel to each other, and are perpendicular to the lateral walls 8 of the other pair.

The bar 2 has then four recessed edges 9, arranged between two adjacent lateral walls 8 and defined by respective outer longitudinal channels 10, parallel to the axis A and having a curved cross section.

Each lateral wall 8 therefore has two opposite longitudinal edges 11, parallel to the axis A.

Internally, the bar 2 has four inner channels 12, each of which is delimited by a lateral wall 8 of the bar 2 and by a pair of edges 9.

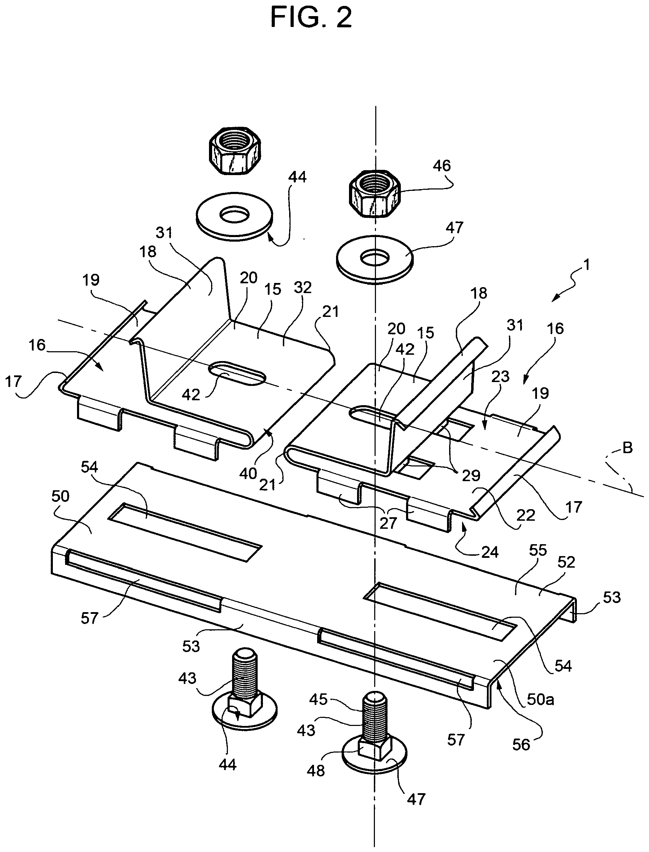

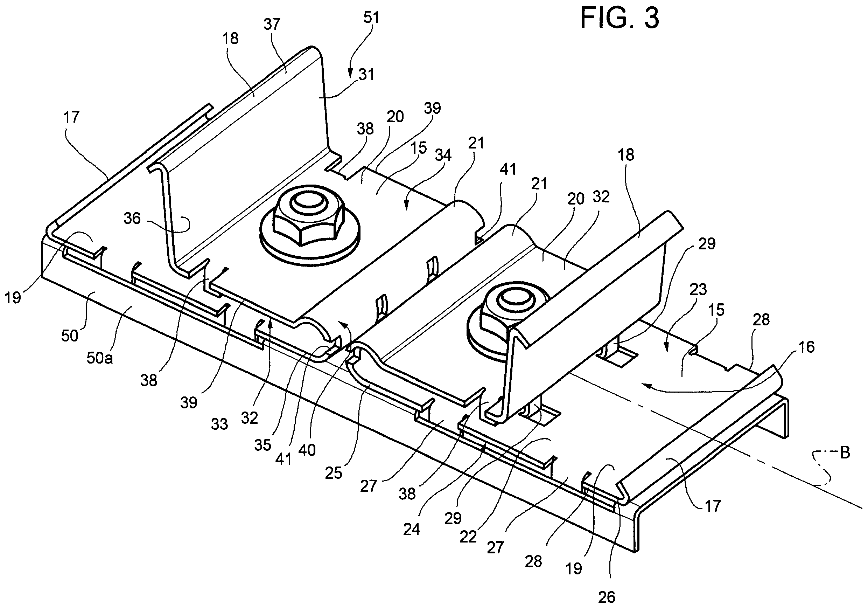

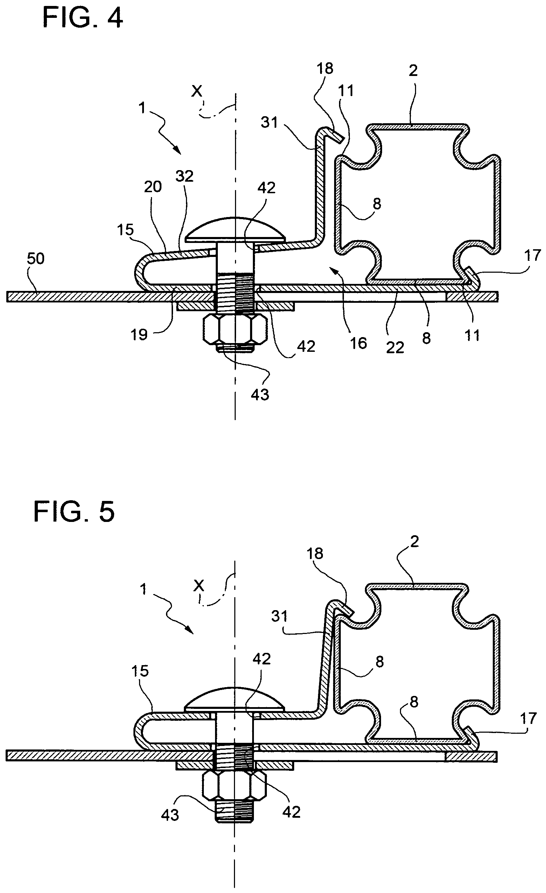

With reference also to Figures 2-5, the fastening device 1 comprises a clamp body 15, consisting of a monolithic piece, preferably of metal, and in particular of a folded metal plate.

The clamp body 15 comprises a coupling seat 16 shaped so as to receive a bar 2 and hooking the bar 2 with at least a pair of opposite coupling teeth 17, 18, which engage respective longitudinal edges 11 diametrically opposite of the bar 2.

The clamp body 15 projects along a longitudinal axis B and comprises two arms 19, 20, substantially facing each other and provided with respective coupling teeth 17, 18, and a curved hinge portion 21, that joins the arms 19, 20.

The arm 19 is substantially straight, being shaped as a substantially flat plate.

In particular, the arm 19 comprises (or consists of) a substantially flat plate 22, having two opposite faces 23, 24 substantially flat and parallel and precisely an inner face 23, facing the opposite arm 20, and an outer face 24, opposite to the inner face 23.

The arm 19 and the base plate 22 extend between two opposite longitudinal ends respectively provided with a root edge 25, joined to the hinge portion 21, and with a free end edge 26, provided with the tooth 17.

The root edge 25 and the free end edge 26 are substantially parallel to one another and perpendicular to the axis B.

In the illustrated example, the free end edge 26 is provided with a single tooth 17 elongated along the entire free end edge 26; it is understood that the tooth 17 may extend for only a portion of the free end edge 26, as well as there may be more teeth 17 laterally adjacent one to the other along the free end edge 26.

The tooth 17 projects from the free end edge 26 and from the face 23 towards the arm 20; the tooth 17 is shaped so as to engage one longitudinal edge 11 of a lateral wall 8 of a bar 2.

Optionally (but not necessarily), the base plate 22 is provided with lateral teeth 27, projecting from the face 24 and from respective opposite lateral edges 28, perpendicular to the root edge 25 and to the free end edge 26 of the plate 22.

For example, along each side edge 28 two lateral teeth 27 spaced apart from each other are provided.

Advantageously, the lateral teeth 27 are formed by respective portions of the plate 22, cut and folded with respect to the plate 22.

Optionally, the arm 19 and in particular the plate 22 are provided with stop teeth 29, for example a pair of stop teeth 29 side by side arranged transversely to the axis B; the stop teeth 29 project from the face 23 towards the arm 20. For example, the stop teeth 29 are formed by respective portions of the plate 22, cut and folded with respect to the plate 22.

The arm 20 is substantially L-shaped and comprises a flange 31 and a clamping plate 32 supporting the flange 31.

The clamping plate 32 is substantially flat and facing the base plate 22; the plate 32 has two opposite faces substantially flat and parallel and precisely an inner face 33, facing towards the plate 22, and an outer face 34, opposite to the inner face 33.

The arm 20 and the plate 32 extend between two opposite longitudinal ends respectively provided with a root edge 35, joined to the hinge portion 21, and a connecting edge 36, joined to the flange 31.

The root edge 35 and the connecting edge 36 are substantially parallel to one another and perpendicular to the axis B.

The flange 31 projects from the connecting edge 36 and from the outer face 34 of the plate 32 and is elbow-shaped bent with respect to the plate 32, for example (but not necessarily) by about 90°.

The flange 31 has a free end edge 37, opposite to the connecting edge 36 and provided with the tooth 18.

In the non-limiting example illustrated, the flange 31 bears a single tooth 18 elongated along the entire free end edge 37; it is understood that the tooth 18 may extend for only a portion of the free end edge 37, as well as there may be more teeth 18 arranged side by side to one another along the free end edge 37.

The tooth 18 projects from the free end edge 37 towards the arm 19 and the plate 22 and in particular towards the tooth 17 of the plate 22; also the tooth 18 is shaped so as to hook one longitudinal edge 11 of a lateral wall 8 of a bar 2.

Optionally (but not necessarily), the arm 20 and precisely the plate 32 are provided with stop teeth 38 (shown in Figure 1, but not in Figure 2), projecting from the face 33 towards the plate 22. For example, the stop teeth 38 project from respective opposite lateral edges 39, perpendicular to the root edge 35 and to the connecting edge 36, of the plate 32, and are formed by respective portions of the plate 32, cut and folded with respect to the plate 32.

The stop teeth 29 of the plate 22 project from the face 23 towards the plate 32 and are placed below the plate 32, in particular below the connecting edge 36.

The hinge portion 21 defines an elastic hinge between the arms 19, 20 and in particular between the plates 22, 32.

The hinge portion 21 has a curve cross-section (orthogonal to the axis B), in particular in the shape of an arc of a circle.

Preferably, the hinge portion 21 has a curved cross section (shaped as a circular arc) with angular opening greater than 180°.

In other words, in cross section the angle between the root edges 25, 35 of the arms 19, 20 (i.e. of the plates 22, 32), defining respective end edges of the hinge portion 21, is greater than 180°.

The base plate 22 tangentially projects from the hinge portion 21, while the clamping plate 32 is joined to the hinge portion 21 by an inflection.

In particular, the outer face 24 of the base plate 22 is substantially tangent to an outer lateral surface 40 of the hinge portion 21, while the outer face 34 of the clamping plate 32 forms an edge with the lateral surface 40 of the hinge portion 21.

Preferably, in undeformed conditions of the plates 22, 32 i.e. when the device 1 is in a rest configuration, the clamping plate 32 is inclined with respect to the base plate 22; in particular, the base plate 22 and the clamping plate 32 diverge with respect to each other from the hinge portion 21.

Advantageously, the hinge portion 21 has grooves or through openings 41 between opposite lateral surfaces of the hinge portion 21, so as to increase the flexibility of the hinge portion 21.

The coupling seat 16 is delimited by the free end edges 26, 37 of the arms 19, 20 and by respective coupling teeth 17, 18.

The plates 22, 32 have respective through openings 42 substantially aligned to one another perpendicularly to the axis B.

The openings 42 are formed centrally between respective opposite lateral side edges 28, 39 of the plates 22, 32 and between respective opposite pairs of faces 23, 24 and 33, 34 of the plates 22, 32.

Preferably, the openings 42 are slot shaped, being elongated longitudinally parallel to the axis B.

In the openings 42 is inserted, in use, a tightening member 43, projecting along an axis X orthogonal to the axis B. The tightening member 43 is provided with opposite annular abutment surfaces 44 cooperating with respective outer faces 24, 34 of the two plates 22, 32 for tightening the plates 22, 32 (i.e. the arms 19, 20) towards each other.

For example, the tightening member 43 comprises a screw 45 with a nut 46; the abutment surfaces 44 are defined by respective facing surfaces of two washers 47 associated with a head 48 of the screw 45 and with the nut 46 (clearly, the washers 47 can be formed integral in one piece with the screw 45 and/or with the nut 46).

The device 1 can be used in various ways for making support frame 3 for sanitary appliances; in general, the device 1 is used for joining a generic component 50 to a bar 2 of the frame 3.

In the example of Figures 1-3, the component 50 is a spacer 50a and two devices 1 are used, together with the spacer 50a, to produce a spacing system 51 for spacing two adjacent and parallel bars 2 of the frame 3.

The spacer 50a (possibly selected from a set of spacers having different lengths) comprises a support plate 52 elongated along a longitudinal axis and, possibly, two longitudinal lateral sides 53 folded with respect to the support plate 52.

The plate 52 is provided with one or more openings 54 formed through the plate 52 between opposite faces 55, 56 of the plate 52. Preferably, the openings 54 are elongated longitudinally (parallel to the lateral sides 53).

In the example shown, the plate 52 has two openings 54 longitudinally aligned to each other.

The lateral sides 53 are optionally provided with respective guides 57, each guide 57 being defined by one or more slots formed along the lateral sides 53.

In use, the fastening devices 1 are mounted on the spacer 50a, in particular by placing the base plate 22 of each device 1 on the support plate 52 of the spacer 50a. Depending on the distance at which the two bars need to be arranged, the devices 1 can be mounted with the respective hinge portions 21 facing each other (as in Figures 1-3), or on the contrary.

Each tightening member 43 is inserted through an opening 54 of the spacer 50a and through the openings 42 of the device 1.

Without tightening the tightening members 43, the devices 1 can be arranged at a desired distance one from the other on the spacer 50a. The lateral teeth 27 (if present) engage the guides 57, to facilitate the positioning of the devices 1.

Each device 1 is in a rest configuration, wherein the arms 19, 20 are in undeformed condition and the tooth 18 is in a divaricated position with respect to the tooth 17, the teeth 17, 18 being spaced apart from each other so as to allow the clamp body 15 to be mounted on a lateral wall 8 of a bar 2, in the transverse direction (orthogonal) to the bar 2 and to the lateral wall 8.

It is therefore possible to introduce each bar 2 into a coupling seat 16 of a device 1, by resting a lateral wall 8 of the bar 2 on the base plate 22.

By tightening the tightening member 43 of each device 1, the arms 19, 20 are pushed towards each other, thus pushing the clamping plate 32 towards the base plate 22.

The arm 20 bends with respect to the arm 19 thanks to the hinge portion 21.

The teeth 17, 18 come close to one another as a result, tightening the bar 2 in the coupling seat 16; the tooth 17 engages one longitudinal edge 11 of the lateral wall 8 resting on the plate 22; the tooth 18 engages one longitudinal edge 11 diametrically opposite to the longitudinal edge 11 hooked to the other tooth 17.

By tightening the tightening member 43, not only the device 1 is locked on the spacer 50th, but at the same time also the bar 2 is locked in the coupling seat 16.

The stop teeth 29, 38 prevent any excessive strain on the tightening members 43 and on the arms 19, 20.

The device 1 reaches a locking configuration, wherein the arms 19, 20 are in deformed condition and the tooth 18 is in a close position with respect to the tooth 17, the teeth 17, 18 being spaced apart from each other so as to tighten the bar 2 between the teeth 17, 18, hooking respective longitudinal edges 11 of the bar 2.

The mounting and positioning of the devices 1 on the bars 2 are easy and fast operations, thanks to the geometry of the clamp body 15 and to the fact that it is in one piece, which facilitates the maneuver.

The fastening operations are also performed in front of the operator, thus resulting comfortable and practical.

The fastening device of the invention can be used in numerous other ways.

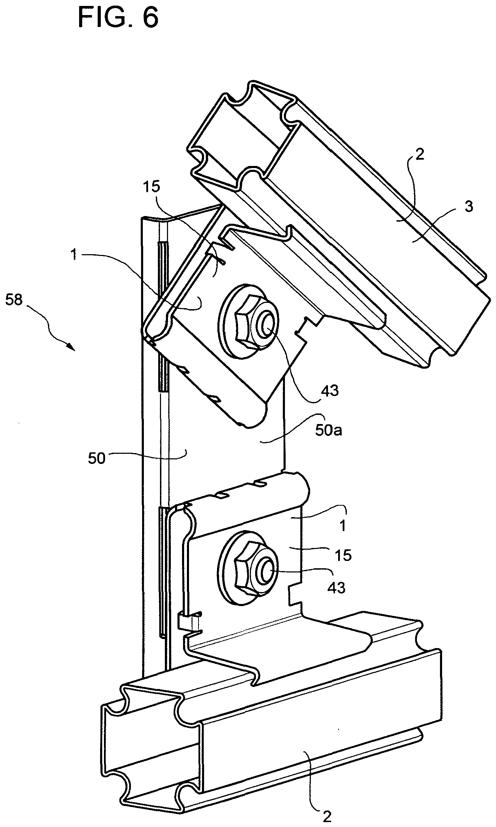

In Figure 6 the use of the device 1 for producing an angular spacing system 58 between two bars 2 of the frame 3 is illustrated.

Still two devices 1 and a spacer 50a as described above are used.

Preferably, the devices 1 are not provided with lateral teeth 27, so that the base plates 22 of the device 1 can easily rotate on the support plate 52 of the spacer 50a.

In this way, it is possible to connect in a stable manner two bars 2 angled towards each other at an angle between 0° (parallel bars) and 90° (orthogonal bars).

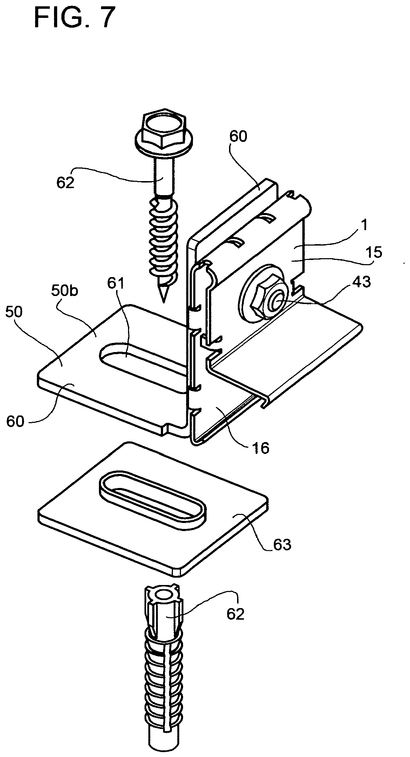

In figures 7-13 the use of a device 1 for fastening a bar 2 (not illustrated in Figure 7) to an outer support surface, for example a wall or a floor is shown.

The component 50 joined by means of the device 1 to the bar 2 is in this case a L-shaped anchoring bracket 50b.

The bracket 50b comprises two orthogonal plates 60 provided with respective through slots 61.

The device 1 is fastened to one of the plates 60, by means of the tightening member 43 inserted through the slot 61 of the plate 60.

The other plate 60 is for anchoring the bracket 50b to the floor or wall), by means of an anchoring dowel 62 and, optionally, with the interposition of a flat rubber gasket 63, in order to prevent or reduce the passage of vibrations from the frame 3 to the floor/wall.

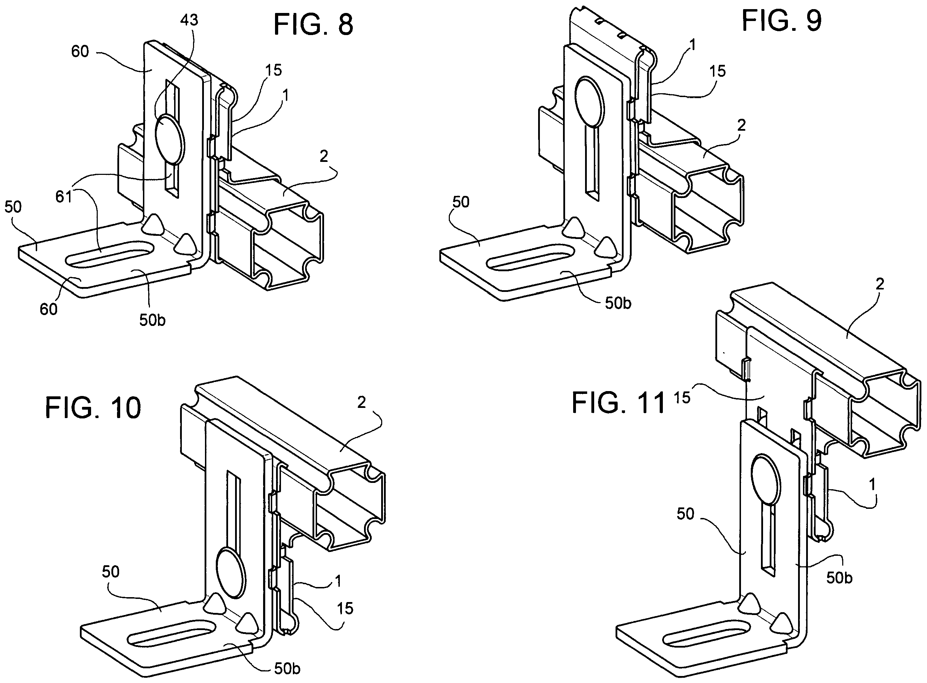

As shown in Figures 8-13 different configurations can be obtained, simply by mounting the device 1 on the bracket 50b in an inverted position and/or by sliding the device 1 with respect to the bracket 50b and/or by rotating the device 1 with respect to the bracket 50b.

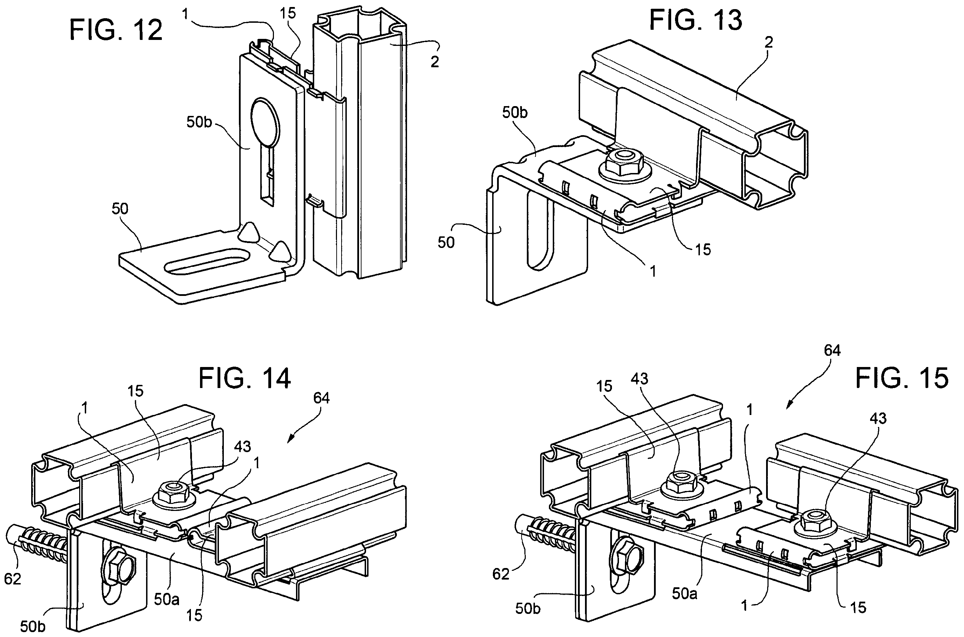

For example: bar 2 parallel to the support surface (wall/floor) and contacting the support surface (Figure 8); bar parallel to the support surface and placed at different distances therefrom (Figures 9-11); bar 2 orthogonal to the support surface (Figures 12-13).

In Figures 14-15 the use of the device 1 for producing a spacing system 64 fastened to the wall is shown.

Two devices 1, a spacer 50a and a bracket 50b as described above are used.

The bracket 50b and the spacer 50a are mounted together (by placing a plate 60 of the bracket 50b under the support plate 52 of the spacer 50a, between the lateral sides 53 of the spacer 50a) by means of the tightening member 43 of one of the devices 1.

In this way the two bars 2 are joined which can be parallel (Figure 14) or perpendicular (figure 15) one to the other, with one of the bars 2 adjacent to a wall or floor (to which the system 64 is fastened by means of a dowel 62).

The device 1 of the invention can be used for further joining other components 50 to the frame 3, in particular by placing the components 50 between two parallel bars 2 of the frame 3.

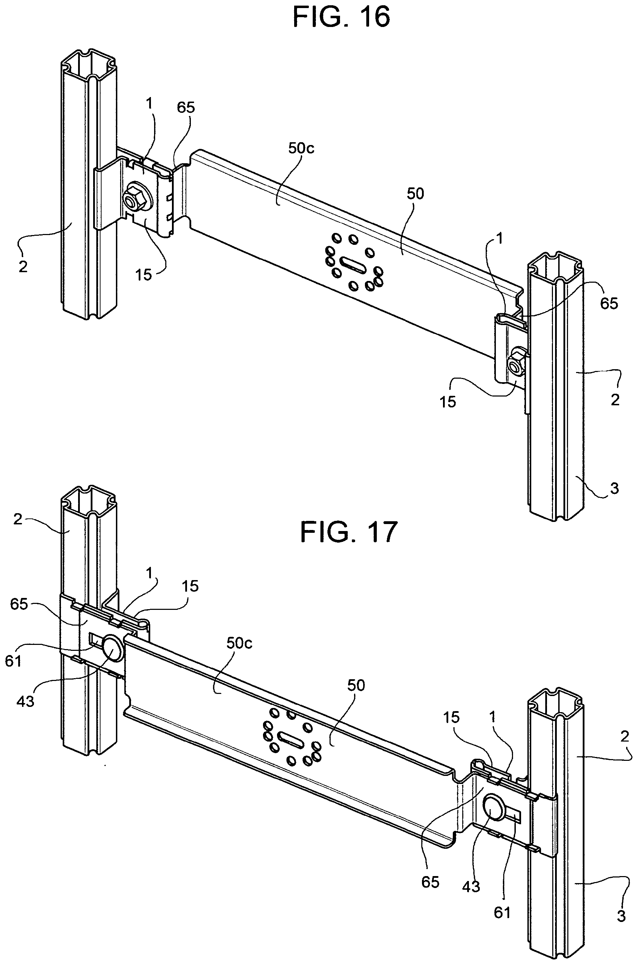

In the example of Figures 16-17 the component 50 to be fastened to the frame 3 is a fastening element 50c of a sanitary appliance (basin, bowl, urinal, pipe holder, etc.).

The fastening element 50c has two opposite end portions 65 provided with respective slots 61 and joined to the respective devices 1 by means of respective tightening members 43 inserted into the slots 61 (as well as into the openings 42 of the devices 1).

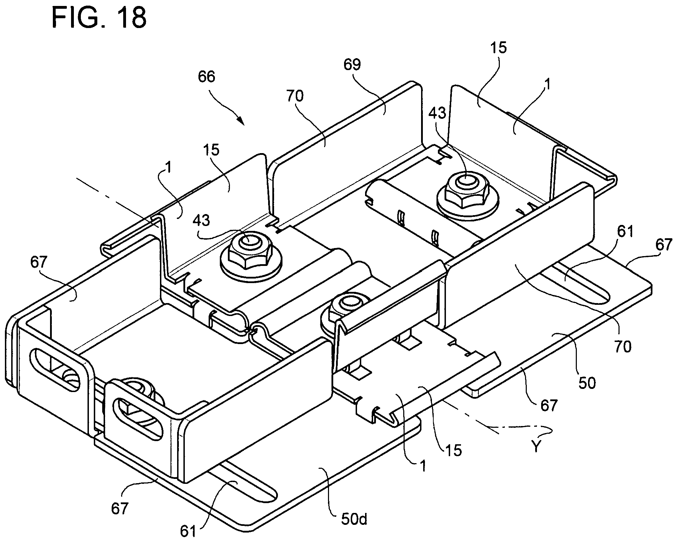

Figures 18-20 show a further application of the device 1, in particular for producing an adjustable support system 66 for self-supporting walls.

The component 50 to be fastened to the frame 3 (not illustrated in these figures) is an adjustable reinforcement plate 50d.

The reinforcement plate 50d has a substantially quadrangular shape in plan and has four sides 67 substantially orthogonal.

The reinforcement plate 50d comprises a pair of half-plates 68 joined together and having respective opposite flat and parallel faces overlapping one another.

The half-plates 68 have respective pairs of parallel overlapped slots 61, placed in proximity to and along respective parallel sides 67 of the half-plates 68.

The two half-plates 68 are joined by means of tightening members which engage the overlapped slots 61 of the half-plates 68 and which may be the tightening members 43 of respective devices 1, or analogues fastening members, fastened to the reinforcement plate 50d (Figure 18).

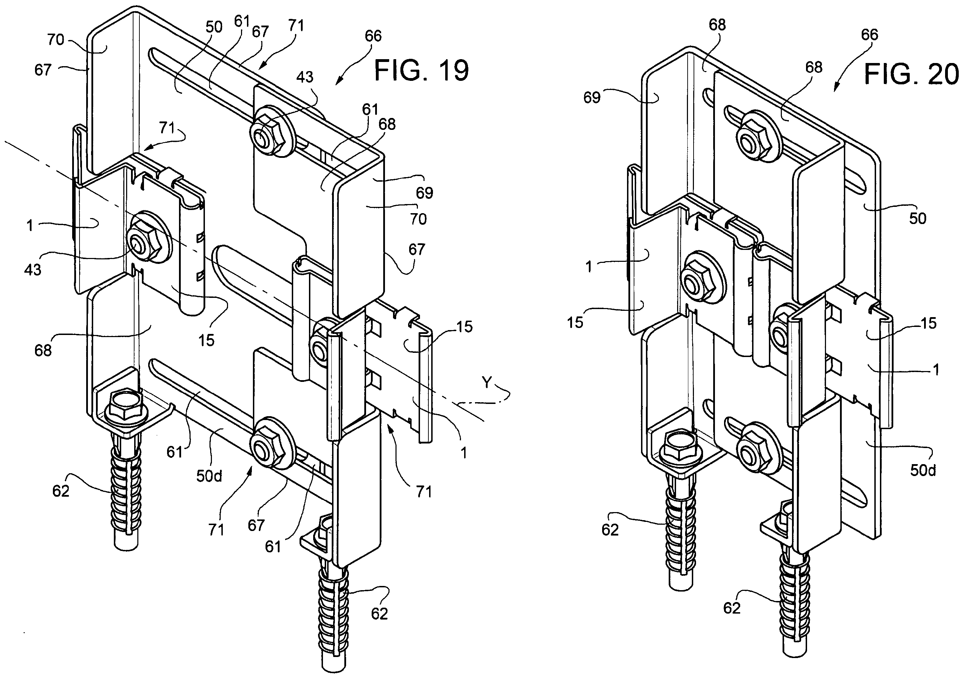

The half-plates 68 are slidable one with respect to the other along a sliding axis Y parallel to the slots 61, so as to vary the dimension of the reinforcement plate 50d along the axis Y (Figures 19-20).

The reinforcement plate 50d has a discontinuous raised peripheral edge 69, formed by respective edge portions 70 of the two half-plates 68; between the edge portions 70 a plurality of flat connection areas 71 for receiving respective devices 1 are provided. Connection areas 71 are placed on all four sides 67 of the reinforcement plate 50d.

In particular, the reinforcement plate 50d has two pairs of raised edge portions 70, folded with respect to the half-plates 68 and separated by a connection area 71, on respective opposite sides 67 orthogonal to the sliding axis Y; and two edge portions 70 placed along one side 67 parallel to the axis Y, on respective opposite corners of the reinforcement plate 50d provided with holes or slots 62 for anchoring to a floor or a wall.

Each side 67 of the reinforcement plate 50d may be provided with a device 1, all the sides 67 having at least one connection area 71 free from raised edge portions 70.

Also four devices 1, one on each side 67 of the reinforcement plate 50d and each connected to a bar 2, can then be mounted on the reinforcement plate 50d, creating extremely resistant systems, particularly suitable for producing self-supporting walls.

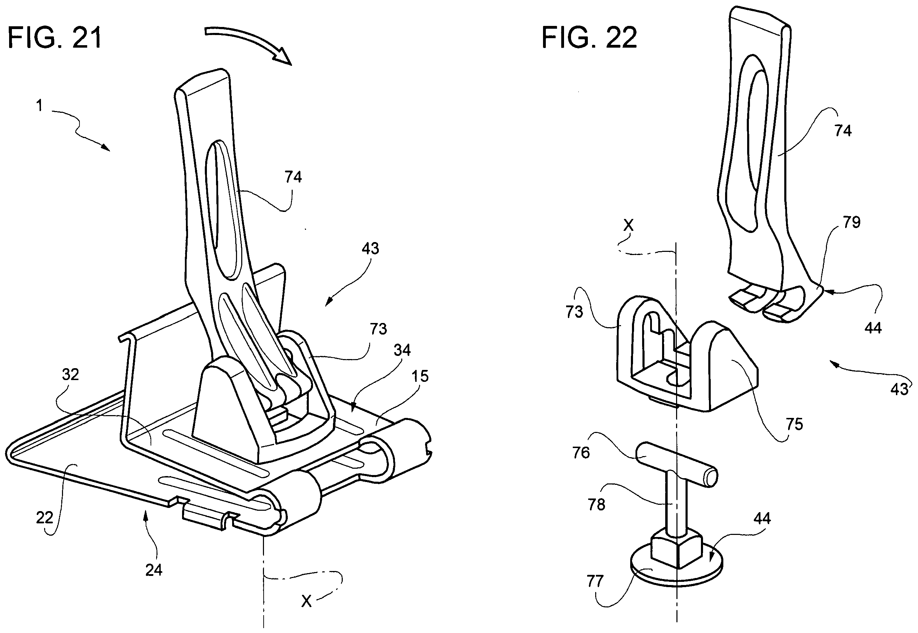

In the alternative embodiment shown in Figures 21, 22 the tightening member 43, instead of being a screw tightening member, is a rapid-type tightening member.

In particular, the tightening member 43 comprises a pushing member 73 extending along an axis X and a locking lever 74 hinged to the pushing member 73; the pushing member 73 and the lever 74 are provided with respective opposite abutment surfaces 44 cooperating with respective outer faces 24, 34 of the plates 22, 32 for tightening the plates 22, 32 (i.e. the arms 19, 20) towards each other.

The pushing member 73 comprises a support 75 provided with a transverse pin 76 substantially perpendicular to the axis X, a washer 77 provided with a first abutment surface 44, a stem 78 extending along the axis X and connecting the pin 76 and the washer 77.

Advantageously, the pushing member 73 is formed by two pieces allowing the assembly of the pushing member 73 to the clamp body 15 of the device 1. A first piece consists of the support 75; a second piece is formed by the pin 76, by the washer 77 and by the stem 78. The two pieces are, for example, snap-joined to each other, by inserting the pin 76 in a suitable seat on the support 75.

The lever 74 is hinged to the support 75 by means of the pin 76 and is rotatable about the pin 76. The lever 74 is provided with a cam 79 eccentric with respect to the pin 76 and provided with a second abutment surface 44.

The stem 78 is arranged through the opening 42 formed in the plates 22, 32; the support 75 and the washer 77 are in contact with respective plates 22, 32.

By rotating the lever 74 (in the direction indicated by the arrow in Figure 21), the cam 79 pushes, by means of its abutment surface 44, the plate 32 towards the plate 22.

Finally, it remains understood that to the fastening device described and illustrated here further modifications and variations may be made which do not depart from the scope of the appended claims.

## Claims

1. A fastening device (1) for making support frames of sanitary appliances, in particular for producing wall systems; comprising a clamp body (15), extending along a longitudinal axis (B) and consisting of a monolithic piece; the clamp body (15) comprising: two arms (19, 20) substantially facing each other and provided with respective opposite coupling teeth (17, 18); a curved hinge portion (21) joining the arms (19, 20) and defining an elastic hinge between the arms (19, 20) allowing the arms (19, 20) to bend with respect to each other; and a coupling seat (16) delimited between the arms (19, 20) and shaped so as to receive a bar (2) of a support frame (3) of sanitary appliances and hooking the bar (2) with said opposite coupling teeth (17, 18), **characterised in that** said opposite coupling teeth (17, 18) are shaped so as to engage respective diametrically opposite longitudinal edges (11) of the bar (2); wherein a first arm (19) of said arms (19, 20) is substantially straight, being shaped as a substantially flat plate and comprising a substantially flat base plate (22) projecting from the hinge portion (21); and a second arm (20) of said arms (19, 20) is substantially L-shaped, comprising a substantially flat clamping plate (32) facing the base plate (22) and projecting from the hinge portion (21), and a flange (31) projecting from the clamping plate (32).

2. A fastening device according to claim 1, wherein the clamp body (15) consists of a monolithic metal piece and in particular of a folded metal plate.

3. A fastening device according to claim 1 or 2, wherein the flange (31) projects from an outer face (34), opposite to the base plate (22), of the clamping plate (32) and is elbow-shaped bent with respect to the clamping plate (32), for example by about 90°.

4. A fastening device according to one of the preceding claims, wherein the coupling teeth (17, 18) are arranged on respective free end edges (26, 37) of the base plate (22) and the clamping plate (32).

5. A fastening device according to one of the preceding claims, wherein the base plate (22) tangentially projects from the hinge portion (21), as the clamping plate (32) is joined to the hinge portion (21) by an inflection.

6. A fastening device according to one of the preceding claims, wherein in undeformed conditions the base plate (22) and the clamping plate (32) diverge with respect to each other from the hinge portion (21).

7. A fastening device according to one of the preceding claims, wherein the base plate (22) is provided with lateral teeth (27), projecting from an outer face (24), opposed to the clamping plate (32), and from respective opposite lateral edges (28) of the base plate (22).

8. A fastening device according to claim 7, wherein there are two lateral teeth (27) spaced apart from each other along each lateral edge (28) of the base plate (22).

9. A fastening device according to claim 7 or 8, wherein the lateral teeth (27) are formed by respective portions of the base plate (22), cut and folded with respect to the base plate (22).

10. A fastening device according to one of the preceding claims, wherein at least one arm (19, 20) is provided with stop teeth (29) projecting from said arm (19, 20) towards the opposite arm (19, 20).

11. A fastening device according to one of the preceding claims, wherein the hinge portion (21) has a curved cross section, in particular in the shape of an arc of a circle.

12. A fastening device according to one of the preceding claims, wherein the hinge portion (21) has a curved, circle-arched cross section with an opening greater than 180°.

13. A fastening device according to one of the preceding claims, wherein the arms (19, 20) have respective through openings (42) substantially aligned in a direction perpendicular to the longitudinal (B) axis and housing a tightening member (43), projecting along an axis (X) perpendicular to the longitudinal axis (B).

14. A fastening device according to claim 13, wherein the tightening member (43) is provided with opposite annular contact surfaces (44) cooperating with respective opposite outer faces (24, 34) of the arms (19, 20) for tightening the arms (19, 20) towards each other.

15. A fastening device according to claim 13 or 14, wherein the openings (42) are slot shaped, being elongated parallel to the longitudinal axis (B).

16. A fastening device according to one of claims 13 to 15, wherein the tightening member (43) is a rapid-type tightening member comprising a pushing member (73) and a locking lever (74) hinged to the pushing member (73) and having a cam (79) cooperating with one of the outer faces (24, 34) of the plates (22, 32) for tightening the plates (22, 32) towards each other.

## Patentansprüche

1. Befestigungsvorrichtung (1) zur Herstellung von Vorrichtungsstützrahmen sanitärer Anlagen, insbesondere zur Herstellung von Wandsystemen, die umfasst: einen Klammerkörper (15), der sich entlang einer Längsachse (B) erstreckt und aus einem monolithischen Teil besteht; wobei der Klammerkörper (15) umfasst: zwei Arme (19, 20), die einander im Wesentlichen zugewandt sind und mit jeweiligen entgegengesetzten Kopplungszähnen (17; 18) versehen sind; einen gekrümmten Gelenkabschnitt (21), der die Arme (19, 20) verbindet und ein elastisches Gelenk zwischen den Armen (19, 20) definiert, das den Armen (19, 20) erlaubt, sich in Bezug aufeinander zu krümmen; und ein Kopplungsauflager (16), das zwischen den Armen (19, 20) begrenzt ist und derart geformt ist, dass es eine Stange (2) eines Halterahmens (3) sanitärer Anlagen aufnimmt und die Stange (2) mit den entgegengesetzten Kopplungszähnen (17, 18) verhakt, **dadurch gekennzeichnet, dass** die entgegengesetzten Kopplungszähne (17, 18) derart geformt sind, dass sie an jeweiligen diametral entgegengesetzten Längskanten (11) der Stange (2) angreifen; wobei ein erster Arm (19) der Arme (19, 20) im Wesentlichen gerade ist, wobei er als eine im Wesentlichen flache Platte geformt ist und eine im Wesentlichen flache Grundplatte (22) umfasst, die von dem Gelenkabschnitt (21) vorsteht; und ein zweiter Arm (20) der Arme (19, 20) im Wesentlichen L-förmig ist, wobei er eine im Wesentlichen flache Einspannplatte (32), die der Grundplatte (22) zugewandt ist und von dem Gelenkabschnitt (21) vorsteht, und einen Flansch (31), der von der Einspannplatte (32) vorsteht, umfasst.

2. Befestigungsvorrichtung nach Anspruch 1, wobei der Klammerkörper (15) aus einem monolithischen Metallteil und insbesondere einer gefalteten Metallplatte besteht.

3. Befestigungsvorrichtung nach Anspruch 1 oder 2, wobei der Flansch (31) von einer Außenfläche (34) entgegengesetzt zu der Grundplatte (22) der Einspannplatte (32) vorsteht und eine zum Beispiel um 90° gekrümmte Form in Bezug auf die Einspannplatte (32) hat.

4. Befestigungsvorrichtung nach einem der vorhergehenden Ansprüche, wobei die Kopplungszähne (17, 18) auf jeweiligen freien Endkanten (26, 37) der Grundplatte (22) und der Einspannplatte (32) angeordnet sind.

5. Befestigungsvorrichtung nach einem der vorhergehenden Ansprüche, wobei die Grundplatte (22) von dem Gelenkabschnitt (21) tangential vorsteht, wenn die Einspannplatte (32) durch eine Biegung mit dem Gelenkabschnitt (21) verbunden wird.

6. Befestigungsvorrichtung nach einem der vorhergehenden Ansprüche, wobei die Grundplatte (22) und die Einspannplatte (32) unter unverformten Bedingungen von dem Gelenkabschnitt (21) in Bezug aufeinander divergieren.

7. Befestigungsvorrichtung nach einem der vorhergehenden Ansprüche, wobei die Grundplatte (22) mit seitlichen Zähnen (27) versehen sind, die von einer Außenfläche (24) entgegengesetzt zu der Einspannplatte (32) und von jeweiligen entgegengesetzten Seitenkanten (28) der Grundplatte (22) vorstehen.

8. Befestigungsvorrichtung nach Anspruch 7, wobei es zwei seitliche Zähne (27) gibt, die entlang jeder Seitenkante (28) der Grundplatte (22) voneinander beabstandet sind.

9. Befestigungsvorrichtung gemäß Anspruch 7 oder 8, wobei die seitlichen Zähne (27) durch jeweilige Abschnitte der Grundplatte (22) ausgebildet sind, die in Bezug auf die Grundplatte (22) geschnitten und gefaltet sind.

10. Befestigungsvorrichtung nach einem der vorhergehenden Ansprüche, wobei wenigstens ein Arm (19, 20) mit Anschlagzähnen (29) versehen ist, die von dem Arm (19, 20) in Richtung des entgegengesetzten Arms (19, 20) vorstehen.

11. Befestigungsvorrichtung nach einem der vorhergehenden Ansprüche, wobei der Gelenkabschnitt (22) einen gekrümmten Querschnitt, insbesondere in der Form eines Kreisbogens, hat.

12. Befestigungsvorrichtung nach einem der vorhergehenden Ansprüche, wobei der Gelenkabschnitt (21) einen gekrümmten kreisbogenförmigen Querschnitt mit einem Öffnungswinkel größer 180° hat.

13. Befestigungsvorrichtung nach einem der vorhergehenden Ansprüche, wobei die Arme (19, 20) jeweilige Durchgangsöffnungen (42) haben, die im Wesentlichen in einer Richtung senkrecht zu der Längsachse (B) ausgerichtet sind und ein Festziehelement (43) aufnehmen, das entlang einer Achse (X) senkrecht zu der Längsachse (B) vorsteht.

14. Befestigungsvorrichtung nach Anspruch 13, wobei das Festziehelement (43) mit entgegengesetzten ringförmigen Kontaktflächen (44) versehen ist, die mit jeweiligen entgegengesetzten Außenflächen (24, 34) der Arme (19, 20) zusammenwirken, um die Arme aufeinander zu festzuziehen.

15. Befestigungsvorrichtung nach Anspruch 13 oder 14, wobei die Öffnungen (42) schlitzförmig sind und entlang der Längsachse (B) langgestreckt sind.

16. Befestigungsvorrichtung nach einem der Ansprüche 13 bis 15, wobei das Festziehelement (43) ein Schnell-Festziehelement ist, das ein Schiebeelement (73) und einen Sperrhebel (74), der an dem Schiebelement (73) gelenkig befestigt ist und eine Nocke (79) hat, die mit den Außenflächen (24, 34) der Platten (22, 32) zusammenwirkt hat, umfasst, um die Platten (22, 32) aufeinander zu festzuziehen.

## Revendications

1. Dispositif de fixation (1) pour fabriquer des cadres de support d'appareils sanitaires, en particulier pour produire des systèmes de paroi ; comprenant un corps de serrage (15), s'étendant le long d'un axe longitudinal (B) et constitué d'une pièce monolithique ; le corps de serrage (15) comprenant : deux bras (19, 20) se faisant face sensiblement l'un l'autre et dotés de dents de couplage opposées respectives (17, 18) ; une partie d'articulation courbée (21) joignant les bras (19, 20) et définissant une articulation élastique entre les bras (19, 20) permettant aux bras (19, 20) de se plier l'un par rapport à l'autre ; et un siège de couplage (16) délimité entre les bras (19, 20) et formé de sorte à recevoir une barre (2) d'un cadre de support (3) d'appareils sanitaires et accrochant la barre (2) avec lesdites dents de couplage opposées (17, 18), **caractérisé en ce que** lesdites dents de couplage opposées (17, 18) sont formées de sorte à engager des arêtes longitudinales diamétralement opposées respectives (11) de la barre (2) ; dans lequel un premier bras (19) desdits bras (19, 20) est sensiblement droit, lequel est formé comme une plaque sensiblement plate et comprend une plaque de base sensiblement plate (22) faisant saillie depuis la partie d'articulation (21) ; et un second bras (20) desdits bras (19, 20) est sensiblement en forme de L, comprenant une plaque de serrage sensiblement plate (32) faisant face à la plaque de base (22) et faisant saillie depuis la partie d'articulation (21), et une bride (31) faisant saillie depuis la plaque de serrage (32).

2. Dispositif de fixation selon la revendication 1, dans lequel le corps de serrage (15) est constitué d'une pièce métallique monolithique et en particulier d'une plaque métallique pliée.

3. Dispositif de fixation selon la revendication 1 ou 2, dans lequel la bride (31) fait saillie depuis une face extérieure (34), opposée à la plaque de base (22) de la plaque de serrage (32) et est pliée en forme de coude par rapport à la plaque de serrage (32) par exemple d'environ 90°.

4. Dispositif de fixation selon l'une des revendications précédentes, dans lequel les dents de couplage (17, 18) sont agencées sur des arêtes d'extrémité libre respectives (26, 37) de la plaque de base (22) et la plaque de serrage (32).

5. Dispositif de fixation selon l'une des revendications précédentes, dans lequel la plaque de base (22) fait saillie tangentiellement depuis la partie d'articulation (21) lorsque la plaque de serrage (32) est jointe à la partie d'articulation (21) par une inflexion.

6. Dispositif de fixation selon l'une des revendications précédentes, dans lequel dans des états non déformés, la plaque de base (22) et la plaque de serrage (32) divergent de la partie d'articulation (21) l'une par rapport à l'autre.

7. Dispositif de fixation selon l'une des revendications précédentes, dans lequel la plaque de base (22) est dotée de dents latérales (27), faisant saillie depuis une face extérieure (24), opposée à la plaque de serrage (32), et depuis des arêtes latérales opposées respectives (28) de la plaque de base (22).

8. Dispositif de fixation selon la revendication 7, dans lequel deux dents latérales (27) sont espacées l'une de l'autre le long de chaque arête latérale (28) de la plaque de base (22).

9. Dispositif de fixation selon la revendication 7 ou 8, dans lequel les dents latérales (27) sont formées par des parties respectives de la plaque de base (22), coupées et pliées par rapport à la plaque de base (22).

10. Dispositif de fixation selon l'une des revendications précédentes, dans lequel au moins un bras (19, 20) est doté de dents d'arrêt (29) faisant saillie depuis ledit bras (19, 20) vers le bras opposé (19, 20).

11. Dispositif de fixation selon l'une des revendications précédentes, dans lequel la partie d'articulation (21) présente une section transversale courbée, en particulier en forme d'arc de cercle.

12. Dispositif de fixation selon l'une des revendications précédentes, dans lequel la partie d'articulation (21) présente une section transversale en arc de cercle courbée avec une ouverture supérieure à 180°.

13. Dispositif de fixation selon l'une des revendications précédentes, dans lequel les bras (19, 20) présentent des ouvertures débouchantes respectives (42) sensiblement alignées dans une direction perpendiculaire à l'axe longitudinal (B) et logeant un élément de compression (43), faisant saillie le long d'un axe (X) perpendiculaire à l'axe longitudinal (B).

14. Dispositif de fixation selon la revendication 13, dans lequel l'élément de compression (43) est doté de surfaces de contact annulaires opposées (44) coopérant avec des faces extérieures opposées respectives (24, 34) des bras (19, 20) pour le serrage des bras (19, 20) l'un vers l'autre.

15. Dispositif de fixation selon la revendication 13 ou 14, dans lequel les ouvertures (42) sont en forme de fente qui est allongée parallèlement à l'axe longitudinal (B).

16. Dispositif de fixation selon l'une des revendications 13 à 15, dans lequel l'élément de compression (43) est un élément de compression de type rapide comprenant un élément de poussée (73) et un levier de verrouillage (74) articulé à l'élément de poussée (73) et présentant une came (79) coopérant avec l'une des faces extérieures (24, 34) des plaques (22, 32) pour la compression des plaques (22, 32) l'une vers l'autre.
